# EUROPÄISCHE PATENTANMELDUNG

(11) **EP 1 761 043 A1**
(43) Veröffentlichungstag der Anmeldung: **07.03.2007**
(21) Anmeldenummer: 06018594.9
(22) Anmeldetag: 05.09.2006
(51) Int. Cl.: H04N 5/253, H04N 3/38, G06K 7/12, H04N 9/11

(54) **Filmscanner**

(30) Priorität: 05.09.2005 DE 102005042136
(71) Anmelder: ARNOLD & RICHTER CINE TECHNIK GMBH & CO. BETRIEBS KG, 80799 München (DE)
(72) Erfinder: Cieslinski, Michael, 82008 Unterhaching (DE); Geissler, Peter, 81541 München (DE)
(74) Vertreter: Manitz, Finsterwald & Partner GbR

(57) **Zusammenfassung**

Die Erfindung betrifft einen Filmscanner zum optischen Abtasten eines Laufbildfilms und zum Erzeugen entsprechender Abtastbilder. Der Filmscanner besitzt einen Infrarotkanal zum optischen Abtasten wenigstens eines Perforationslochs des Laufbildfilms in einem infraroten Spektralbereich und zum Erzeugen entsprechender Infrarotbilddaten. Ferner besitzt der Filmscanner eine Auswerteeinrichtung zum Auswerten der Infrarotbilddaten hinsichtlich der Position des Perforationslochs und zum Erzeugen wenigstens eines entsprechenden Bildlage-Korrektursignals. Die Erfindung betrifft ferner ein entsprechendes Verfahren.

## Beschreibung

Die Erfindung betrifft einen Filmscanner zum optischen Abtasten eines Laufbildfilms und zum Erzeugen entsprechender Abtastbilder.

Ein derartiger Filmscanner dient zum Abtasten der Bildinformation eines belichteten Films, beispielsweise zum Zwecke einer digitalen Nachbearbeitung. Hierfür ist üblicherweise eine Transmissions- bzw. Durchlichtanordnung mit wenigstens drei Farbkanälen vorgesehen, wobei das abzutastende Filmmaterial auf der einen Seite beleuchtet wird, und wobei auf der anderen Seite eine Empfangsoptik und ein Lichtempfänger angeordnet sind. Das Erzeugen der Abtastbilder erfolgt für verschiedene sichtbare Spektralbereiche, typischerweise mit einem roten, einem grünen und einem blauen Farbkanal (RGB-Abtastung), wobei die verschiedenen Abtastbilder üblicherweise nacheinander aufgezeichnet werden.

Der Laufbildfilm wird in einem derartigen Filmscanner intermittierend transportiert, um die Einzelbildausschnitte - d.h. die einzeln aufeinander folgenden Filmbilder - nacheinander zu beleuchten und abzutasten. Hierbei ist es erwünscht, eine Sequenz von aufeinander folgenden Einzelbildausschnitten ohne Bildversatz abzutasten, insbesondere ohne horizontalen Bildversatz (weave) und ohne vertikalen Bildversatz (jitter). Die Einzelbildausschnitte sollen also in gleich bleibender Relativlage bezüglich der Filmbahn und bezüglich des Gesichtsfelds des Lichtempfängers des Filmscanners erfasst werden, um bei einem späteren Abspielen der abgetasteten Bildersequenz ein "Ruckeln" zu vermeiden.

Zu diesem Zweck ist es bekannt, die Position des Laufbildfilms in einer Ruhestellung zwischen zwei Transportbewegungen exakt zu fixieren, wobei üblicherweise Sperrgreiferstifte in die Perforationslöcher eingreifen, die an den beiden Längsseiten des Films vorgesehen sind und zum Transport des Films mittels einer Zahntrommel dienen. Eine derartige mechanische Registrierung führt jedoch zu einer unerwünschten Abnutzung der Perforationslöcher. Altes Filmmaterial kann zudem geschrumpft oder geschnitten und geklebt sein, so dass die mechanische Registrierung mit Hilfe von Sperrgreiferstiften nicht mehr mit der gewünschten Genauigkeit möglich ist. Außerdem ist das Einführen und Zurückziehen der Sperrgreiferstifte unerwünscht zeitaufwendig.

Es ist daher auch bekannt, die tatsächliche Bildlage nach kapazitiven oder optischen Methoden zu erfassen und eine entsprechende Nachpositionierung des Films vorzunehmen. Auch hierdurch wird jedoch nicht immer die erwünschte Genauigkeit erzielt.

Es ist eine Aufgabe der Erfindung, im Zusammenhang mit dem optischen Abtasten eines Laufbildfilms einen Bildversatz auf einfache Weise und mit hoher Genauigkeit zu vermeiden.

Diese Aufgabe wird durch einen Filmscanner mit den Merkmalen des Anspruchs 1 gelöst, und insbesondere dadurch, dass der Filmscanner einen Infrarotkanal zum optischen Abtasten wenigstens eines Perforationslochs des Laufbildfilms in einem infraroten Spektralbereich und zum Erzeugen entsprechender Infrarotbilddaten aufweist, und dass der Filmscanner ferner eine Auswerteeinrichtung zum Auswerten der Infrarotbilddaten hinsichtlich der Position des Perforationslochs und zum Erzeugen wenigstens eines entsprechenden Bildlagekorrektursignals aufweist.

Bei dem erfindungsgemäßen Filmscanner wird also nach einer Transportbewegung des Laufbildfilms wenigstens ein Perforationsloch des Films mittels eines Infrarotkanals optisch abgetastet. Hierbei werden Infrarotbilddaten erzeugt, die die genaue Lage des abgetasteten Perforationslochs repräsentieren. Mittels einer Auswerteeinrichtung werden die Infrarotbilddaten hinsichtlich der Lage des Perforationslochs ausgewertet, um erforderlichenfalls ein entsprechendes Bildlage-Korrektursignal zu erzeugen, das letztlich zur Korrektur einer Abweichung der erfassten tatsächlichen Lage des Perforationslochs und somit des betreffenden Einzelbildausschnitts bezüglich einer Sollposition entspricht. Falls eine Korrektur der ermittelten Abweichung mittels einer Mikroverschiebung des Films, der verwendeten Optik oder des verwendeten Lichtempfängers vorgesehen ist, so erfolgt das erläuterte Abtasten im Infraroten vorzugsweise noch vor einem nachfolgenden Erzeugen der (sichtbaren) Abtastbilder.

Um bei der Erfassung der Position des Perforationslochs eine besonders hohe Genauigkeit zu erzielen, ist es wichtig, dass das Abtasten des Perforationslochs in einem infraroten Spektralbereich erfolgt. Der Erfindung liegt nämlich die folgende Erkenntnis zugrunde:

Bei der Auswertung der Lochposition wird insbesondere der Verlauf des Lochrands analysiert. Hierbei macht man sich zunutze, dass das Perforationsloch im Durchlichtbild stets heller erscheint als der Film. Wenn der Film jedoch mit sichtbarem Licht durchstrahlt wird, so hängt die erfasste Helligkeit des Filmmaterials bzw. ein erzeugter Bildpunkt-Messwert von der Bildinformation und der entsprechenden Verteilung der Farbstoffe des belichteten Laufbildfilms ab. Wenn also die Filmhelligkeit in der Umgebung des Lochrands nicht konstant ist, kann dies beim Abtasten des Perforationslochs in einem sichtbaren Spektralbereich zu unerwünschten Ungenauigkeiten bei der Bestimmung der Lage des Lochrands und somit der Lage des Perforationslochs führen.

Es hat sich gezeigt, dass eine derartige ungleichmäßige Filmhelligkeit entlang des Lochrands bereits allein aufgrund des Transports des Laufbildfilms während der Belichtung in der Kamera entstehen kann. Während des intermittierenden Transports des Films in der Kamera tauchen nämlich Zalintrömmelzähne und Registrierstifte in die Perforationslöcher ein, um den Laufbildfilm entsprechend zu beschleunigen bzw. um einen Einzelbildausschnitt kurzzeitig für eine Belichtung in einer definierten Lage zu fixieren. Insbesondere bei höheren Geschwindigkeiten bewirkt die hierbei auftretende mechanische Belastung des Lochrands eine gewisse Belichtung (so genannte Druckbelichtung des Films).

Wenn hingegen das Abtasten des Perforationslochs in einem infraroten Spektralbereich erfolgt, wird dieser nachteilige Effekt umgangen. Im Infraroten sind die Farbstoffe des belichteten Films nämlich im Wesentlichen transparent, so dass der Bildinhalt und insbesondere eine eventuelle Druckbelichtung des Films sich nicht nachteilig auf die Auswertung der Lochposition auswirken.

Ein weiterer Nachteil des Abtastens der Perforationslöcher im Sichtbaren besteht darin, dass eine Anpassung der Beleuchtungsintensität an das jeweilige Filmmaterial erforderlich ist. Die Lichtabsorption des (unbelichteten) Filmmaterials selbst ist nämlich für jeden Filmtyp unterschiedlich. Falls also die Beleuchtungsintensität nicht individuell eingestellt wird, besteht die Gefahr, dass die Perforationslöcher überbelichtet abgebildet werden oder der das Perforationsloch umgebende Film zu dunkel abgebildet wird, was sich ungünstig auf die Genauigkeit der Auswertung der Lochposition auswirken würde. Bei der Verwendung einer Infrarotbeleuchtung für das Abtasten der Perforationslöcher hingegen ist die erläuterte Variation der Absorption bei unterschiedlichen Filmtypen geringer als im Sichtbaren. Die Vermeidung einer nachteiligen Überbelichtung bzw. Unterbelichtung ist daher einfacher, und es ist insbesondere keine individuelle Anpassung der Beleuchtungsintensität erforderlich.

Schließlich hat sich auch gezeigt, dass bei der Verwendung eines Infrarotkanals für das Abtasten der Perforationslöcher sogar zwischen einem inneren Rand und einem äußeren Rand des jeweiligen Perforationslochs unterschieden werden kann. Der Lochrand verläuft nämlich - im Querschnitt entlang einer Normalebene zu der Filmebene - nicht exakt geradlinig, sondern er ist im Querschnitt durch das Filmmaterial leicht ballig bzw. konvex zum Lochmittelpunkt gewölbt ausgebildet, so dass in Draufsicht zwischen einem äußeren Rand (Begrenzung des Lochs an der Filmoberfläche) und einem inneren Rand (maximale Erstreckung zum Lochmittelpunkt hin) unterschieden werden kann. Der äußere Lochrand ist jedoch nur bei dem Abtasten im Infraroten erkennbar. Durch Einbeziehen der Information sowohl über die Lage des äußeren Lochrands als auch über die Lage des inneren Lochrands kann die Genauigkeit der Positionsauswertung noch weiter gesteigert werden.

Zu der Erfindung ist noch anzumerken, dass aufgrund der optischen Erfassung der jeweiligen Position der Perforationslöcher der Filmtransport mit einer relativ geringen Präzision erfolgen kann, so dass höhere Transportgeschwindigkeiten möglich sind. Eventuelle hierdurch entstehende Bildlagefehler können nämlich anhand der erfassten Lochpositionen korrigiert werden.

Insbesondere ist es bei dem erfindungsgemäßen Filmscanner auch möglich, eine ständige Korrektur der Bildlage vorzunehmen, beispielsweise um aufgrund des Bildlage-Korrektursignals, das im Zusammenhang mit dem Abtasten eines bestimmten Einzelbildausschnitts des Laufbildfilms erzeugt worden ist, auch die nachfolgende Transportbewegung für das Abtasten des nächsten Einzelbildausschnitts des Laufbildfilms zu steuern bzw. zu korrigieren.

Gemäß einer vorteilhaften Ausführungsform erfolgt das Abtasten des Perforationslochs bei einer Wellenlänge von ca. 890 nm. Bei dieser Wellenlänge kann die Position eines Perforationslochs für gängige Filmmaterialien mit besonders hoher Genauigkeit erfasst werden.

Zur Verwirklichung des Infrarotkanals zum Abtasten der Perforationslöcher bestehen verschiedene Möglichkeiten. Insbesondere kann der Filmscanner eine eigene Infrarotlichtquelle besitzen, beispielsweise eine oder mehrere Infrarot-Leuchtdioden. Alternativ hierzu kann auch eine Weißlichtquelle zum Einsatz gelangen, die sowohl sichtbares Licht (für das Erzeugen der RGB-Abtastbilder) als auch Infrarotlicht abstrahlt. Einer derartigen Weißlichtquelle kann ein Infrarotfilter zugeordnet sein, das wahlweise - beispielsweise mittels eines Filterrads - in den Strahlengang eingebracht wird, um eine reine Infrarot-Abtastung vorzunehmen. Ferner ist es auch möglich, eine Unterscheidung der Spektralbereiche empfangsseitig vorzunehmen, nämlich durch Verwendung eines Bildsensors, der ausschließlich im Infraroten empfindlich ist oder der wahlweise oder dauerhaft mit einem Infrarotfilter versehen ist.

Sofern die Unterscheidung zwischen den sichtbaren Spektralbereichen für das Erzeugen der Abtastbilder einerseits und dem infraroten Spektralbereich für das Abtasten des Perforationslochs andererseits durch Verwendung unterschiedlicher Lichtquellen oder durch den Einsatz von einschwenkbaren Filtern verwirklicht wird, ist es möglich, einen einzigen optoelektronischen Lichtempfänger zum Erzeugen sowohl der RGB-Abtastbilder als auch der Infrarotbilddaten zu verwenden. In diesem Fall wird also ein Lichtempfänger eingesetzt, der sowohl im Sichtbaren als auch im Infraroten detektiert, wobei die Unterscheidung zwischen den verschiedenen Abtastkanälen durch Verwendung unterschiedlicher Lichtquellen oder unterschiedlicher Filter erfolgt.

Es ist jedoch von Vorteil, wenn der Infrarotkanal einen eigenen Bildsensor aufweist, der separat von einem optoelektronischen Lichtempfänger zum Erzeugen der RGB-Abtastbilder ausgebildet ist. In diesem Fall kann der betreffende Bildsensor nämlich zum Abtasten eines Filmausschnitts ausgebildet sein, der lediglich das oder die zu betrachtenden Perforationslöcher des Films enthält und somit deutlich kleiner ist als jener Filmausschnitt, der von dem Lichtempfänger zum Erzeugen der RGB-Abtastbilder betrachtet wird. Andererseits kann der Bildsensor des Infrarotkanals die Infrarotbilddaten mit einer höheren Auflösung erzeugen als die RGB-Abtastbilder, so dass die Perforationslöcher mit einer besonders hohen Präzision erfasst werden.

Das Auswerten der Infrarotbilddaten hinsichtlich der Lochposition kann beispielsweise dadurch erfolgen, dass die ermittelte Position des Perforationslochs mit einer vorbestimmten Soll-Position verglichen wird, wobei das genannte Bildlage-Korrektursignal der Abweichung der ermittelten Lochposition von der Soll-Position entspricht. Hierbei können natürlich unterschiedliche Richtungen berücksichtigt werden, insbesondere zwei zueinander orthogonale Richtungen (X/Y-Abweichung).

Die Korrektur der Bildlage aufgrund der erzeugten Bildlage-Korrektursignale kann rein elektronisch erfolgen. In diesem Fall werden die einzelnen Bildpunkt-Messwerte der sichtbaren Abtastbilder (Farbkanäle) bezüglich einer vorbestimmten matrixförmigen Anordnung verschoben, wobei zusätzlich oder alternativ zu einem rein translatorischen Verschieben auch ein Drehen oder ein Spreizen oder Stauchen der Bilddaten entlang einer oder mehrerer Richtungen erfolgen kann, um detektierte Verzerrungen des abgetasteten Filmmaterials zu kompensieren. Eine derartige elektronische Bildlagekorrektur kann mittels der genannten Auswerteeinrichtung oder einer zusätzlichen Korrektureinrichtung bereits innerhalb des Filmscanners oder extern durchgeführt werden.

Alternativ zu einer derartigen elektronischen Korrektur kann der Filmscanner eine Verstelleinrichtung besitzen, mittels derer gemäß den erzeugten Bildlage-Korrektursignalen entweder die Lage eines abzutastenden Einzelbildausschnitts des Laufbildfilms relativ zu dem Gesichtsfeld des verwendeten Lichtempfängers verstellt wird, beispielsweise mittels wenigstens eines an der Filmbahn angreifenden Piezo-Aktuators (Verschieben und/oder Verdrehen der Filmbahn). Oder die optischen Eigenschaften einer Empfangsoptik des Filmscanners werden entsprechend den erzeugten Bildlage-Korrektursignalen geändert, beispielsweise durch Verkippen einer planparallelen transparenten Platte. Auch eine Kombination dieser Maßnahmen ist denkbar. Eine derartige mechanische oder optische Korrektur wird grundsätzlich für denjenigen Einzelbildausschnitt des Laufbildfilms durchgeführt, der dem gerade abgetasteten Perforationsloch entspricht bzw. räumlich benachbart ist. Vorzugsweise wird diese Korrektur jedoch auch für den nächsten abzutastenden Einzelbildausschnitt berücksichtigt.

Im Falle der erläuterten mechanischen oder optischen Korrektur der Bildlage ist es auch von Vorteil, wenn das Abtasten der Perforationslöcher mittels des Infrarotkanals und die entsprechende Korrekturmaßnahme mittels der genannten Verstelleinrichtung iterativ durchgeführt werden.

Mit anderen Worten sollen das Erzeugen der Infrarotbilddaten und das jeweils nachfolgende Verstellen der Lage des abzutastenden Einzelbildausschnitts bzw. das Verstellen der Abbildungscharakteristik der Empfangsoptik gegebenenfalls mehrmals wiederholt werden, bis eine vorbestimmte maximale Abweichung der erfassten Position des Perforationslochs von einer vorbestimmten Soll-Position erreicht ist. Erst danach erfolgt das eigentliche Abtasten des Einzelbildausschnitts in den sichtbaren Spektralbereichen (RGB-Abtastung). Hierdurch ist sichergestellt, dass für jeden Einzelbildausschnitt des Laufbildfilms eine optimale Bildlage eingestellt ist, bevor die Abtastbilder der sichtbaren Spektralbereiche erzeugt werden.

Weiterhin ist es bevorzugt, wenn das Bildlage-Korrektursignal, das im Zusammenhang mit dem Abtasten eines bestimmten Einzelbildausschnitts des Laufbildfilms erzeugt wird, auch für eine Korrektur einer nachfolgenden Transportbewegung des Laufbildfilms zum Zwecke des Abtastens des nächsten Einzelbildausschnitts berücksichtigt wird. Beispielsweise kann der Filmscanner hierfür eine Steuereinrichtung besitzen, die eine Transporteinrichtung zu einer intermittierenden Transportbewegung des Laufbildfilms ansteuert, wobei für jede Transportbewegung das zuvor erzeugte Bildlage-Korrektursignal berücksichtigt wird, um einen abzutastenden Einzelbildausschnitt von vornherein in einer optimalen Lage zu positionieren und nachfolgende Korrekturmaßnahmen somit weitgehend unnötig zu machen.

Gemäß einer weiteren vorteilhaften Weiterbildung der Erfindung dient der genannte Infrarotkanal nicht nur zum Erfassen der jeweiligen Position der Perforationslöcher, sondern auch zum optischen Abtasten wenigstens eines Längsrands des abzutastenden Films in einem infraroten Spektralbereich, wobei entsprechende Infrarotbilddaten erzeugt werden. Diese können von der Auswerteeinrichtung für das Erzeugen des Bildlage-Korrektursignals zusätzlich zu der erfassten Lochposition berücksichtigt werden.

Die Erfindung bezieht sich auch auf ein Verfahren zum optischen Abtasten eines Laufbildfilms und zum Erzeugen entsprechender Abtastbilder, bei dem wenigstens ein Perforationsloch des Laufbildfilms in einem infraroten Spektralbereich abgetastet wird und entsprechende Infrarotbilddaten erzeugt werden, wobei die Infrarotbilddaten hinsichtlich der Position des Perforationslochs ausgewertet werden und wenigstens ein entsprechendes Bildlage-Korrektursignal erzeugt wird.

Weitere Ausführungsformen sind in den Unteransprüchen genannt.

Die Erfindung wird nachfolgend lediglich beispielhaft unter Bezugnahme auf die Zeichnungen erläutert.
- Fig. 1: zeigt den Aufbau einer ersten Ausführungsform eines Filmscanners.
- Fig. 2: zeigt den Aufbau einer zweiten Ausführungsform eines Filmscanners.
- Fig. 3: zeigt einen Abschnitt eines belichteten Laufbildfilms mit mehreren aufeinander folgenden Einzelbildern.

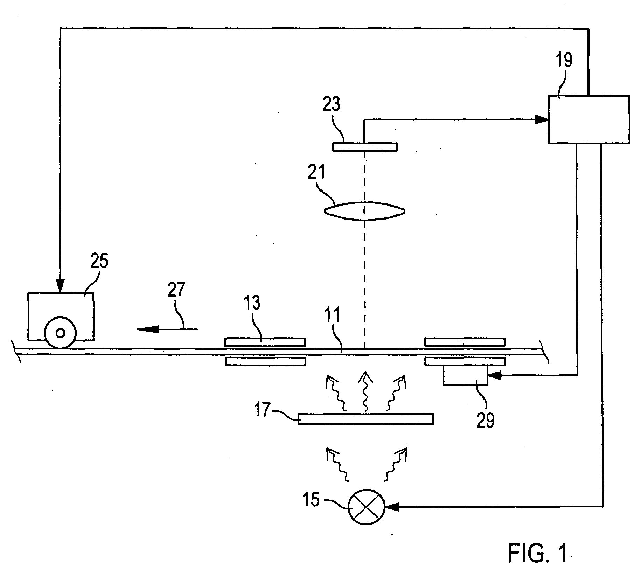

Fig. 1 illustriert den Aufbau eines Filmscanners zum optischen Abtasten eines belichteten Laufbildfilms 11, der in einer Filmbahn 13 geführt wird. Der Laufbildfilm 11 bzw. ein Einzelbildausschnitt hiervon wird mittels einer Lichtquelle 15 und eines nachgeordneten Diffusors 17 wahlweise mit rotem, blauem, grünem oder infrarotem Licht beleuchtet. Beispielsweise kann die Lichtquelle 15 als Weißlichtquelle mit zugeordnetem Filterrad ausgebildet sein oder die Lichtquelle 15 besitzt mehrere Leuchtdioden mit unterschiedlichem Emissionsspektrum entsprechend den genannten Spektralbereichen. Die Auswahl des jeweils benötigten Spektralbereichs des Sendelichts bzw. der hierdurch gebildeten Abtastkanäle kann mittels einer Steuer- und Auswerteschaltung 19 erfolgen, die mit der Lichtquelle 15 verbunden ist.

Auf der der Lichtquelle 15 gegenüber liegenden Seite des Laufbildfilms 11 ist eine Empfangsoptik 21 angeordnet, die beispielhaft als Sammellinse dargestellt ist. Die Empfangsoptik 21 bildet den abzutastenden Einzelbildausschnitt des Lauffbildfilms 11 auf einen optoelektronischen Lichtempfänger 23 ab, der beispielsweise als CCD- oder CMOS-Empfänger mit einer matrixförmigen Anordnung von fotoelektrischen Empfangselementen ausgebildet ist. Die Empfangselemente erzeugen in Abhängigkeit von der Lichtbeaufschlagung einen jeweiligen Bildpunkt-Messwert, wobei der Lichtempfänger 23 sowohl im Sichtbaren als auch im Infraroten empfindlich ist. Der Lichtempfänger 23 ist mit einem Eingang der Steuer- und Auswerteschaltung 19 verbunden.

Das optische Abtasten des Laufbildfilms 11 erfolgt dadurch, dass dieser mittels einer Antriebseinrichtung 25 bildausschnittsweise entlang einer Transportrichtung 27 bewegt wird. In jeder Ruhestellung des Laufbildfilms 11 wird der von der Filmbahn 13 freigegebene Einzelbildausschnitt durch entsprechende Ansteuerung der Lichtquelle 15 nacheinander erst mit infrarotem und danach mit rotem, grünem und blauem Licht beleuchtet. Hierbei wird mittels des Lichtempfängers 23 für jeden Abtastkanal bzw. Spektralbereich ein Abtastbild mit einer Matrix von Bildpunkt-Messwerten erzeugt und mittels der Steuer- und Auswerteschaltung 19 ausgelesen.

Alternativ ist grundsätzlich auch eine zeilenweise erfolgende Abtastung möglich.

Die Abtastbilder der drei Farbkanäle (rot, grün, blau) liefern die in dem abgetasteten Einzelbildausschnitt enthaltene Bildinformation, beispielsweise für eine digitale Nachbearbeitung des Laufbildfilms 11. Die genannte Abtastung im Infraroten erfolgt vorzugsweise vor der Erzeugung der drei Abtastbilder im Sichtbaren, wobei in dem infraroten Spektralbereich zumindest ein solcher Bereich des Laufbildfilms 11 abgetastet wird, der ein Perforationsloch enthält, wie nachfolgend noch erläutert wird. Die entsprechend erzeugten Infrarotbilddaten werden von der Steuer- und Auswerteschaltung 19 hinsichtlich der genauen Position des erfassten Perforationslochs ausgewertet, wobei im Falle einer vorbestimmten Abweichung der ermittelten Lochposition von einer Soll-Position ein Bildlage-Korrektursignal erzeugt wird, das dem Grad dieser Abweichung entspricht. Anhand dieses Bildlage-Korrektursignals steuert die Steuer- und Auswerteschaltung 19 einen piezoelektrischen Aktuator 29 an, der an der Filmbahn 13 angeordnet ist. Hierdurch wird ein geringfügiges zeitliches Versetzen der Filmbahn 13 und somit des darin gehaltenen Laufbildfilms 11 bewirkt, der sich immer noch in der genannten Ruhestellung befindet.

Aufgrund der erläuterten Ansteuerung des piezoelektrischen Aktuators 29 befindet sich der Laufbildfilm 11 und insbesondere der abzutastende Einzelbildausschnitt nun exakt in der gewünschten Position. Erst jetzt werden für den betreffenden Einzelbildausschnitt die Abtastbilder der sichtbaren Spektralbereiche erzeugt. Sodann veranlasst die Steuer- und Auswerteschaltung 19 die Antriebseinrichtung 25 dazu, den Laufbildfilm 11 entlang der Transportrichtung 27 in die nächste Ruhestellung zu bringen, um für den nächsten Einzelbildausschnitt zunächst die Infrarot-abtastung des zugeordneten Perforationslochs durchführen zu können und danach wieder die Abtastbilder der Farbkanäle zu erzeugen.

Aufgrund der erläuterten Bildlagekorrektur ist sichergestellt, dass bezüglich des Abtastens mehrerer aufeinander folgender Einzelbildausschnitte des Laufbildfilms 11 kein unerwünschter Bildversatz auftritt. Die erläuterte Bildlagekorrektur (Abtasten des Perforationslochs im Infraroten und entsprechendes Verstellen der Filmbahn 13) kann für denselben Einzelbildausschnitt gegebenenfalls auch mehrmals hintereinander durchgeführt werden.

Der besondere Vorteil der Verwendung eines Infrarotkanals besteht - wie eingangs bereits erläutert - darin, dass die Position eines betrachteten Perforationslochs und insbesondere die Lage des Lochrands ungeachtet einer möglichen optischen Belichtung oder einer Druckbelichtung der Lochumgebung mit einer besonders hohen Genauigkeit erfasst werden können.

Alternativ oder zusätzlich zu dem piezoelektrischen Aktuator 29 kann eine Verstelleinrichtung auch an der Empfangsoptik 21 oder dem Lichtempfänger 23 angreifen.

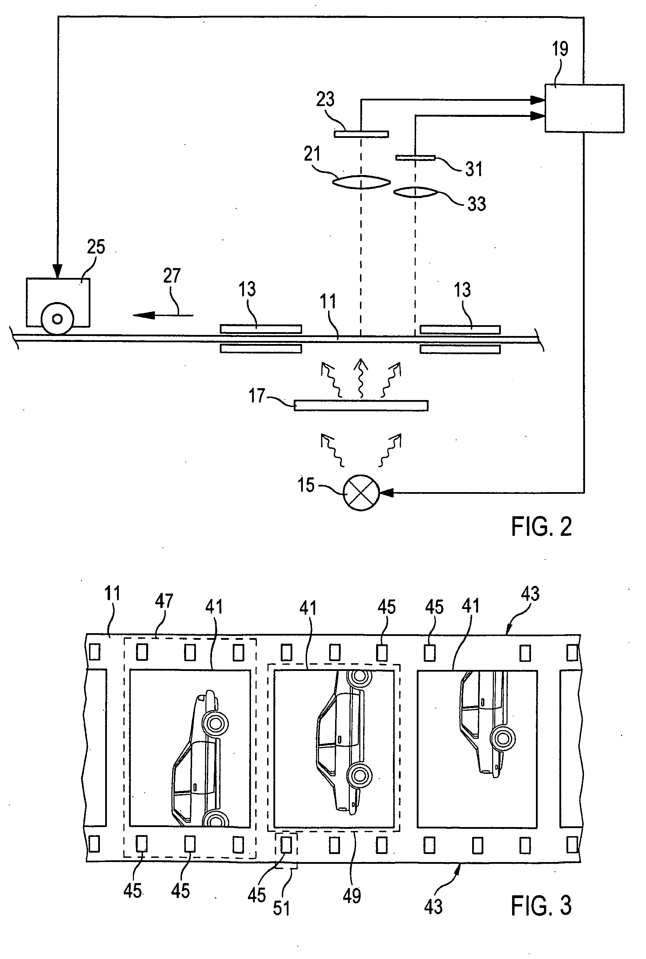

Fig. 2 zeigt eine alternative Ausgestaltung eines Filmscanners, wobei gleiche oder gleichartige Elemente wie in Fig. 1 mit denselben Bezugszeichen gekennzeichnet sind.

Im Unterschied zu der Ausführungsform gemäß Fig. 1 dient der Lichtempfänger 23 lediglich zur Erzeugung der Abtastbilder der drei Farbkanäle (rot, grün, blau). Für das Abtasten der Perforationslöcher des Laufbildfilms 11 im Infraroten ist ein eigener Infrarotbildsensor 31 mit zugeordneter Empfangsoptik 33 vorgesehen, der ebenfalls an einen Eingang der Steuer- und Auswerteschaltung 19 angeschlossen ist. Der Infrarotbildsensor 31 erfasst nicht den eigentlichen Einzelbildausschnitt des Laufbildfilms 11 mit der darin enthaltenen Bildinformation, sondern ist lediglich auf eines oder mehrere der Perforationslöcher des Laufbildfilms 11 gerichtet, um die exakte Position des betreffenden Perforationslochs zu bestimmen bzw. entsprechende Infrarotbilddaten an die Steuer- und Auswerteschaltung 19 auszugeben. Der Infrarotbildsensor 31 betrachtet also einen Flächenbereich des Laufbildfilms 11, der deutlich geringer ist als der von dem Lichtempfänger 23 erfasste Einzelbildausschnitt. Allerdings besitzt der Infrarotbildsensor 31 eine höhere Auflösung als der Lichtempfänger 23, so dass bei ähnlicher Datenmenge das betreffende Perforationsloch mit einer höheren Genauigkeit dargestellt wird.

Ein weiterer Unterschied zu der Ausführungsform gemäß Fig. 1 besteht darin, dass keine mechanische Verstellung der Filmbahn 13 mittels eines piezoelektrischen Aktuators oder einer sonstigen Verstelleinrichtung vorgesehen ist. Stattdessen verwendet die Steuer- und Auswerteschaltung 19 die Infrarotbilddaten des Infrarotbildsensors 31 für eine rein elektronische Positionskorrektur der Abtastbilder, die von dem Lichtempfänger 23 erzeugt werden.

Fig. 3 zeigt einen Abschnitt des belichteten Laufbildfilms 11 mit mehreren Einzelbildausschnitten 41 und der darin enthaltenen Bildinformation (z.B. vorbeifahrendes Auto). Zwischen der Anordnung der Einzelbildausschnitte 41 und jedem Längsrand 43 des Laufbildfilms 11 befindet sich eine jeweilige Anordnung von rechteckigen Perforationslöchern 45.

In Fig. 3 ist ein möglicher Bildbereich 47 gezeigt, der von dem Lichtempfänger 23 der Ausführungsform gemäß Fig. 1 erfasst wird, d.h. dieser Lichtempfänger 23 betrachtet sowohl den Einzelbildausschnitt 41 mit der eigentlichen Bildinformation, als auch die umgebenden Perforationslöcher 45.

Ferner zeigt Fig. 3 den Bildbereich 49, der von dem Lichtempfänger 23 der Ausführungsform gemäß Fig. 2 betrachtet wird. Dieser Bildbereich 49 entspricht im Wesentlichen dem die Bildinformation enthaltenden Einzelbildausschnitt 41. Der bei der Ausführungsform gemäß Fig. 2 zusätzlich vorgesehene Infrarotbildsensor 31 betrachtet hingegen einen Bildbereich 51, der lediglich ein einziges Perforationsloch 45 sowie einen Teil des Längsrands 43 des Laufbildfilms 11 enthält.

### Bezugszeichenliste

- 11: Laufbildfilm
- 13: Filmbahn
- 15: Lichtquelle
- 17: Diffusor
- 19: Steuer- und Auswerteschaltung
- 21: Empfangsoptik
- 23: Lichtempfänger
- 25: Antriebseinrichtung
- 27: Transportrichtung
- 29: piezoelektrischer Aktuator
- 31: Infrarotbildsensor
- 33: Empfangsoptik
- 41: Einzelbildausschnitt
- 43: Längsrand
- 45: Perforationsloch
- 47: Bildbereich
- 49: Bildbereich
- 51: Bildbereich

## Patentansprüche

1. Filmscanner zum optischen Abtasten eines Laufbildfilms (11) und zum Erzeugen entsprechender Abtastbilder, mit:
- einem Infrarotkanal zum optischen Abtasten wenigstens eines Perforationslochs (45) des Laufbildfilms in einem infraroten Spektralbereich und zum Erzeugen entsprechender Infrarotbilddaten, und
- einer Auswerteeinrichtung (19) zum Auswerten der Infrarotbilddaten hinsichtlich der Position des Perforationslochs und zum Erzeugen wenigstens eines entsprechenden Bildlage-Korrektursignals.

2. Filmscanner nach Anspruch 1,
**dadurch gekennzeichnet,**
**dass** der Infrarotkanal zum optischen Abtasten des Perforationslochs (45) bei einer Wellenlänge von ca. 890 nm ausgebildet ist.

3. Filmscanner nach einem der vorhergehenden Ansprüche,
**dadurch gekennzeichnet,**
**dass** der Infrarotkanal eine Infrarotlichtquelle (15), eine Weißlichtquelle mit einem zugeordneten Infrarotfilter oder einen Bildsensor mit einem zugeordneten Infrarotfilter besitzt.

4. Filmscanner nach einem der vorhergehenden Ansprüche,
**dadurch gekennzeichnet,**
**dass** der Filmscanner einen optoelektronischen Lichtempfänger (23) zum Erzeugen sowohl der Abtastbilder als auch der Infrarotbilddaten besitzt.

5. Filmscanner nach einem der Ansprüche 1 bis 3,
**dadurch gekennzeichnet,**
**dass** der Infrarotkanal einen Bildsensor (31) aufweist, der separat von einem optoelektronischen Lichtempfänger (23) zum Erzeugen der Abtastbilder ausgebildet ist.

6. Filmscanner nach Anspruch 5,
**dadurch gekennzeichnet,**
**dass** der Infrarotkanal hinsichtlich der Erzeugung der Infrarotbilddaten eine höhere Auflösung besitzt als der Lichtempfänger (23) hinsichtlich der Erzeugung der Abtastbilder,
und/oder
**dass** der Infrarotkanal zum Abtasten einer geringeren Fläche des Laufbildfilms (11) als der Lichtempfänger (23) ausgebildet ist.

7. Filmscanner nach einem der vorhergehenden Ansprüche;
**dadurch gekennzeichnet,**
**dass** die Auswerteeinrichtung (19) zum Vergleichen der ermittelten Position des Perforationslochs (45) mit einer Soll-Position ausgebildet ist, wobei das Bildlage-Korrektursignal einer Abweichung der ermittelten Position von der Soll-Position entspricht.

8. Filmscanner nach einem der vorhergehenden Ansprüche,
**dadurch gekennzeichnet,**
**dass** die Auswerteeinrichtung (19) oder eine zusätzliche Korrektureinrichtung des Filmscanners für eine elektronische Bildlagekorrektur der Abtastbilder anhand des Bildlage-Korrektursignals ausgebildet ist.

9. Filmscanner nach einem der Ansprüche 1 bis 7,
**dadurch gekennzeichnet,**
**dass** der Filmscanner ferner eine Verstelleinrichtung (29) aufweist, durch die anhand des Bildlage-Korrektursignals die Lage eines abzutastenden Einzelbildausschnitts (41) des Laufbildfilms (11), die Lage eines Lichtempfängers (23) und/oder die Abbildungscharakteristik einer Empfangsoptik (21) des Filmscanners verstellbar ist.

10. Filmscanner nach Anspruch 9,
**dadurch gekennzeichnet,**
**dass** der Filmscanner eine Steuereinrichtung (19) aufweist, durch die der Infrarotkanal und die Verstelleinrichtung (29) zu einem iterativen Erzeugen der Infrarotbilddaten und einem jeweils nachfolgenden Verstellen der Lage des abzutastenden Einzelbildausschnitts (41) und/oder der Abbildungscharakteristik der Empfangsoptik (21) ansteuerbar sind.

11. Filmscanner nach einem der vorhergehenden Ansprüche,
**dadurch gekennzeichnet,**
**dass** der Filmscanner eine Steuereinrichtung (19) aufweist, die für das Abtasten von aufeinander folgenden Einzelbildausschnitten (41) des Laufbildfilms zum Steuern einer intermittierenden Transportbewegung des Laufbildfilms ausgebildet ist, wobei die Steuereinrichtung dazu konfiguriert ist, das im Zusammenhang mit dem Abtasten eines Einzelbildausschnitts (41) erzeugte Bildlage-Korrektursignal für eine Korrektur der nachfolgenden Transportbewegung zum Abtasten des nächsten Einzelbildausschnitts (41) anzuwenden.

12. Filmscanner nach einem der vorhergehenden Ansprüche,
**dadurch gekennzeichnet,**
**dass** der Infrarotkanal zum optischen Abtasten auch wenigstens eines Rands (43) des abzutastenden Films in einem infraroten Spektralbereich und zum Erzeugen entsprechender Infrarotbilddaten ausgebildet ist.

13. Verfahren zum optischen Abtasten eines Laufbildfilms (11) und zum Erzeugen entsprechender Abtastbilder, bei dem:
- wenigstens ein Perforationsloch (45) des Laufbildfilms in einem infraroten Spektralbereich abgetastet wird und entsprechende Infrarotbilddaten erzeugt werden, und
- die Infrarotbilddaten hinsichtlich der Position des Perforationslochs ausgewertet werden und wenigstens ein entsprechendes Bildlage-Korrektursignal erzeugt wird.

14. Verfahren nach Anspruch 13,
**dadurch gekennzeichnet,**
**dass** das Perforationsloch (45) mittels eines Bildsensors (31) abgetastet wird, der separat von einem optoelektronischen Lichtempfänger (23) zum Erzeugen der Abtastbilder ausgebildet ist.

15. Verfahren nach einem der Ansprüche 13 oder 14,
**dadurch gekennzeichnet,**
**dass** die ermittelte Position des Perforationslochs (45) mit einer Soll-Position verglichen wird, wobei das Bildlage-Korrektursignal einer Abweichung der ermittelten Position von der Soll-Position entspricht.

16. Verfahren nach einem der Ansprüche 13 bis 15,
**dadurch gekennzeichnet,**
**dass** die Abtastbilder anhand des Bildlage-Korrektursignals elektronisch korrigiert werden, insbesondere durch Verschieben von Bildpunkt-Messwerten.

17. Verfahren nach einem der Ansprüche 13 bis 15,
**dadurch gekennzeichnet,**
**dass** anhand des Bildlage-Korrektursignals die Lage eines abzutastenden Einzelbildausschnitts (41) des Laufbildfilms, die Lage eines Lichtempfängers (23) und/oder die Abbildungscharakteristik einer Empfangsoptik (21) des Filmscanners verstellt wird, wobei das Abtasten des Einzelbildausschnitts (41) zum Erzeugen der Abtastbilder erst nach dem Verstellen erfolgt.

18. Verfahren nach Anspruch 17,
**dadurch gekennzeichnet,**
**dass** der Schritt des Erzeugens von Infrarotbilddaten, der Schritt des Erzeugens wenigstens eines entsprechenden Bildlage-Korrektursignals, und der Schritt des Verstellens der Lage des Einzelbildausschnitts (41), der Lage des Lichtempfängers (23) und/ oder der Abbildungscharakteristik der Empfangsoptik (21) so lange wiederholt werden, bis eine vorbestimmte maximale Abweichung der Position des Perforationslochs (45) unterschritten ist, und dass das Abtasten des Einzelbildausschnitts (41) zum Erzeugen der Abtastbilder erst danach erfolgt.

19. Verfahren nach einem der Ansprüche 13 bis 18,
**dadurch gekennzeichnet,**
**dass** das Bildlage-Korrektursignal, das im Zusammenhang mit dem Abtasten eines Einzelbildausschnitts (41) des Laufbildfilms erzeugt wird, für eine Korrektur einer nachfolgenden Transportbewegung des Laufbildfilms (11) zum Abtasten des nächsten Einzelbildausschnitts (41) verwendet wird.
